# EUROPEAN PATENT SPECIFICATION

(11) **EP 2 194 417 B1**
(45) Date of publication and mention of the grant of the patent: **18.04.2012**
(21) Application number: 09252591.4
(22) Date of filing: 10.11.2009
(51) Int. Cl.: G02B 26/08

(54) **Vibrating mirror element**
Vibrierendes Spiegelelement
Élément vibrant de miroir

(30) Priority: 05.12.2008 JP 2008310365; 15.12.2008 JP 2008318709
(43) Date of publication of application: 09.06.2010
(73) Proprietor: Funai Electric Co., Ltd., Daito-shi, Osaka 574-0031 (JP)
(72) Inventor: Kotera, Hidetoshi, Kyoto-shi, Kyoto 606-8501 (JP); Kanno, Isaku, Kyoto-shi, Kyoto 606-8501 (JP); Murayama, Manabu, Daito-shi, Osaka 574-0013 (JP); Inoue, Naoki, Daito-shi, Osaka 574-0013 (JP)
(74) Representative: Calderbank, Thomas Roger

(56) References cited:
- EP-A2- 1 857 855
- JP-A- 2008 040 353

## Description

The present invention relates to a vibrating mirror element, and more particularly, it relates to a vibrating mirror element including a driving portion.

### Description of the Background Art

A vibrating mirror element including a driving portion is known in general, as disclosed in each of Japanese Patent Laying-Open Nos. 2005-333048 and 10-174462 (1998), Japanese Patent No. 4092283, Japanese Patent Laying-Open Nos. 2007-312465 and 2006-293116, Japanese Patent No. 3956933 and Japanese Patent Laying-Open No. 2007-10823, for example.

The aforementioned Japanese Patent Laying-Open No. 2005-333048 discloses an actuator including a driving arm supported by support portions on both end portions and so formed that the width thereof is reduced from both end portions toward a central portion in plan view and driving electrodes provided with piezoelectric layers and formed on the lower surfaces of both end portions of the driving arm respectively. In this actuator, the driving electrodes are so provided on both end portions of the driving arm as to ensure the areas of the driving electrodes while the width of the driving arm is reduced from both end portions toward the central portion so that the driving arm can be rendered easily deflectable in the vertical direction, whereby a driving region can be enlarged.

The aforementioned Japanese Patent Laying-Open No. 10-174462 discloses a piezoelectric conversion vibrator shaped into an isosceles triangle so that the width thereof is reduced from fixed ends fixed to stationary members toward a forward free end mounted with a weight and formed to have a constant thickness. This piezoelectric conversion vibrator is so formed that the maximum flexural stress on the fixed ends can be uniformly generated on the overall surface of the piezoelectric conversion vibrator, whereby a voltage generated in the piezoelectric conversion vibrator can be substantially doubled as compared with a case where the same has a constant width from the fixed ends toward the free end. Japanese Patent Laying-Open No. 10-174462 describes no deformed shape of the piezoelectric conversion vibrator so formed that the width thereof is reduced from the fixed ends toward the free end.

Each of the aforementioned Japanese Patent No. 4092283, Japanese Patent Laying-Open Nos. 2007-312465 and 2006-293116, Japanese Patent No. 3956933 and Japanese Patent Laying-Open No. 2007-10823 discloses a drive unit or the like including a mirror portion, a beam portion connected to the mirror portion and a driving portion connected with the beam portion and having a constant width in plan view.

When the actuator according to the aforementioned Japanese Patent Laying-Open No. 2005-333048 is applied to a vibrating mirror element, the vibrating mirror element may conceivably be so formed that a mirror portion is arranged on the central portion of the driving arm while the driving arm is vertically deflected to vary a position for reflecting light on the mirror portion. When the actuator according to the aforementioned Japanese Patent Laying-Open No. 2005-333048 is applied to the vibrating mirror element, however, the driving arm and the mirror portion may conceivably not be resonatable due to the driving electrodes directly provided on the lower surface of the driving arm. Therefore, the angle of inclination of the mirror portion may conceivably be disadvantageously reduced.

The aforementioned Japanese Patent Laying-Open No. 10-174462 describes no deformed shape of the piezoelectric conversion vibrator. When the piezoelectric conversion vibrator according to the aforementioned Japanese Patent Laying-Open No. 10-174462 is applied to a vibrating mirror element, therefore, the vibrating mirror element may conceivably be so formed that a mirror portion is arranged in place of the weight provided on the forward end portion of the piezoelectric conversion vibrator while the piezoelectric conversion vibrator is deformed by applying a voltage thereto. Thus, the mirror portion can be inclined by deformation of the piezoelectric conversion vibrator. When the piezoelectric conversion vibrator according to the aforementioned Japanese Patent Laying-Open No. 10-174462 is applied to the vibrating mirror element, however, the mirror portion may conceivably not be resonatable since the same is directly provided on the forward end portion of the piezoelectric conversion vibrator. Therefore, the angle of inclination of the mirror portion may conceivably be disadvantageously reduced.

In the drive unit or the like described in each of the aforementioned Japanese Patent No. 4092283, Japanese Patent Laying-Open Nos. 2007-312465 and 2006-293116, Japanese Patent No. 3956933 and Japanese Patent Laying-Open No. 2007-10823, the driving portion having the constant width in plan view may conceivably be mainly deformable only in the vertical direction. Therefore, no torsional deformation is caused on the driving portion, and hence the angle of inclination of the mirror portion is disadvantageously reduced. JP-A-2008-040353 discloses an optical device in which a mirror is supported on a support via two elastic sections. A drive means is provided for turning the mirror, with the elastic sections being twisted as the mirror turns.

According to the present invention there is provided a vibrating mirror element comprising:
a mirror portion reflecting light;
a torsionally deformable beam portion connected to said mirror portion for supporting said mirror portion in a vibratile manner; and
a pair of driving portions having connecting portions connected with said beam portion for driving said mirror portion through said torsionally deformable beam portion,
characterised in that:
   the vibrating mirror element further includes a pair of supporting portions provided in the vicinity of central portions of said pair of driving portions in the longitudinal direction respectively for constituting supporting ends in vibration of said pair of driving portions and fixing said pair of driving portions; wherein
   the widths of said connecting portions of said driving portions in the direction in which said second beam portion of said connecting portion extends, is rendered small than the width of a portion of said driving portions other than said connecting portions in plan view,
   the driving portions are formed to be concavely and convexly deformable in the direction Z with fixed ends defined by the central portions in the vicinity of the fixed portions 28 and 29, wherein the direction Z is perpendicular to the plane in which the mirror portion the pair of first beam portions and the pair of second beam portions extend when the driving portions are undeformed; and
   the beam portion includes a pair of first beam portions having first end portions connected with both sides of said mirror portion respectively and a pair of second beam portions connected with second end portions of said pair of first beam portions respectively, the driving portion includes a first driving portion having a pair of first connecting portions connected with first end portions of said pair of second beam portions respectively and a second driving portion having a pair of second connecting portions connected with second end portions of said pair of second beam portions respectively, and the widths of said pair of first connecting portions of said first driving portion are rendered small than the width of a portion of said first driving portion other than said pair of first connecting portions respectively, while with widths (W4) of said pair of second connecting portions of said second driving portion are rendered smaller than the width of a portion of said driving portion other than said pair of second connecting portions respectively.

With the present invention it becomes possible to provide a vibrating mirror element with a large angle over which the mirror may be inclined.

In the vibrating mirror element according to the invention, as hereinabove described, the width of the connecting portion of the driving portion is rendered smaller than the width of the portion of the driving portion other than the connecting portion so that the connecting portion of the driving portion having the small width is easily torsionally deformed by deflection in a direction orthogonal to the longitudinal direction, whereby the quantity of torsional deformation of the connecting portion can be increased when the driving portion is deformed while the beam portion is connected to the connecting portion. Thus, the beam portion connected to the connecting portion of the driving portion can be largely inclined and torsionally deformed, whereby the angle of inclination of the mirror portion connected to the beam portion can be enlarged. Further, the mirror portion is not directly arranged on the driving portion and the driving portion is not directly arranged on the beam portion, whereby the mirror portion can be resonated. Thus, the angle of inclination of the mirror portion can be further enlarged.

In the vibrating mirror element according to the invention, the connecting portion of the driving portion is preferably formed on an end portion of the driving portion. According to this structure, the quantity of deformation from a reference portion is increased on the end portion of the driving portion beyond that on a portion other than the end portion, whereby the angle of inclination of the mirror portion can be further enlarged by providing the connecting portion on the end portion.

In the vibrating mirror element according to the,invention the beam portion is preferably connected with the driving portion from a direction orthogonal to the longitudinal direction of the driving portion on the connecting portion, and a side surface of the driving portion opposite to the connecting portion is preferably formed to extend in a direction parallel to the longitudinal direction of the driving portion. According to this structure, a side surface of the driving portion closer to the connecting portion is inclined along the longitudinal direction of the driving portion so that the width of the connecting portion of the driving portion is smaller than the width of the portion of the driving portion other than the connecting portion. Thus, the connecting portion can be torsionally deformed to be deflected oppositely to the beam portion, whereby the angle of inclination of the mirror portion can be further enlarged.

In this case, the side surface of the driving portion closer to the connecting portion is preferably formed to protrude toward the side of the beam portion in plan view. According to this structure, the connecting portion can be torsionally deformed to be further deflected oppositely to the beam portion, whereby the angle of inclination of the mirror portion can be further enlarged.

Further, the pair of first connecting portions and the pair of second connecting portions of the first and second driving portions having the small widths are easily torsionaly deformed by deflection in the direction orthogonal to the longitudinal direction respectively, whereby the quantities of torsional deformation of the pair of first connecting portions and the pair of second connecting portions can be increased when the first and second driving portions are deformed while the pair of second beam portions are connected to the pair of first connecting portions and the pair of second connecting portions respectively. Thus, the pair of second beam portions connected to the pair of first connecting portions and the pair of second connecting portions of the first and second driving portions respectively can be largely inclined and torsionally deformed, whereby the angle of inclination of the mirror portion connected to the pair of first beam portions connected with the pair of second beam portions can be enlarged.

In this case, the pair of first connecting portions of the first driving portion are preferably formed on both end portions of the first driving portion respectively, while the pair of second connecting portions of the second driving portion are preferably formed on both end portions of the second driving portion respectively. According to this structure, the quantities of deflection from reference portions are increased on both end portions of the first and second driving portions beyond those on portions other than both end portions respectively, whereby the angle of inclination of the mirror portion can be further enlarged by providing the pair of first connecting portions and the pair of second connecting portions on both end portions of the first and second driving portions respectively.

The vibrating mirror element according to the invention preferably further includes a fixed portion provided in the vicinity of a central portion of the driving portion in the longitudinal direction for constituting a fixed end in vibration of the driving portion, and the driving portion is preferably so formed that the width thereof is gradually reduced from a portion in the vicinity of the fixed portion toward the connecting portion of the driving portion in plan view. According to this structure, the width on the fixed end of the driving portion can be enlarged, whereby the driving portion can be stably driven in a fixed state. Further, the fixed portion is so provided in the vicinity of the central portion of the driving portion in the longitudinal direction that the distances between the fixed portion and both connecting portions can be rendered identical to each other when the connecting portions are provided on both end portions, whereby the quantities of deformation on both connecting portions can be rendered identical to each other. Thus, the quantities of deformation applied to the beam portion can be inhibited from differing from each other due to different quantities of deformation on both end portions of the driving portion, whereby breakage of the beam portion can be suppressed. Further, the width of the driving portion is so gradually reduced that the portion of the driving portion varying in width can be prevented from application of stress resulting from remarkable change of the width.

In this case, the driving portion is preferably so formed that the width thereof is continuously reduced from the portion in the vicinity of the fixed portion toward the connecting portion of the driving portion in plan view. According to this structure, the portion of the driving portion varying in width can be more prevented from application of stress.

In the aforementioned vibrating mirror element having the driving portion so formed that the width thereof is continuously reduced, a side surface of the driving portion closer to the connecting portion is preferably formed to linearly extend in a state inclined with respect to the longitudinal direction of the driving portion in plan view. According to this structure, the width of the driving portion constantly changes, whereby the portion of the driving portion varying in width can be more prevented from application of stress.

In the aforementioned vibrating mirror element having the driving portion so formed that the width thereof is gradually reduced, the driving portion is preferably so formed that the width thereof is reduced stepwise from the portion in the vicinity of the fixed portion toward the connecting portion of the driving portion in plan view. According to this structure, the beam portion can be easily deformed, whereby the angle of inclination of the mirror portion can be further enlarged.

In the aforementioned vibrating mirror element having the driving portion so formed that the width thereof is reduced stepwise, a side surface of the driving portion closer to the connecting portion is preferably formed to have a step in plan view. According to this structure, the end portion can be torsionally deformed to be deflected oppositely to the beam portion on the step, whereby the beam portion can be more easily deformed. Thus, the angle of inclination of the mirror portion can be further enlarged.

In the aforementioned vibrating mirror element having the driving portion so formed that the width thereof is gradually reduced, the width of the beam portion is preferably rendered smaller than the width of at least the portion of the driving portion in the vicinity of the fixed portion. According to this structure, the beam portion can be easily deformed, whereby vibration of the mirror portion can be enlarged.

In the vibrating mirror element according to the the driving portion is preferably formed to be symmetrical to a straight line passing through a central portion of the driving portion in the longitudinal direction and extending in the short-side direction of the driving portion in plan view. According to this structure, the quantities of deformation on both end portions can be reliably rendered identical to each other, whereby the quantities of deformation applied to the beam portion can be more inhibited from differing from each other due to different quantities of deformation on both end portions of the driving portion. Thus, breakage of the beam portion can be more suppressed.

In the vibrating mirror element according to the invention the connecting portion of the driving portion is preferably formed as a free end, and the beam portion connected to the connecting portion of the driving portion is preferably inclined and torsionally deformed by flexural deformation and torsional deformation of the driving portion. According to this structure, the portion of the driving portion connected with the beam portion serves as the free end, whereby the quantity of deformation of the connecting portion can be further increased.

The vibrating mirror element according to the invention preferably further includes an outer beam portion connected to the driving portion and torsionally deformable and an outer driving portion having an outer connecting portion connected with the outer beam portion for driving the mirror portion. According to this structure, the mirror portion can be two-dimensionally inclined.

The foregoing and other objects, features, aspects and advantages of the present invention will become more apparent from the following detailed description of the present invention when taken in conjunction with the accompanying drawings.

In the drawings
Fig. 1 is a perspective view showing the overall structure of a vibrating mirror element according to an embodiment of the present invention;
Fig. 2 is a plan view showing the overall structure of the vibrating mirror element according to the embodiment of the present invention;
Fig. 3 is a sectional view of the vibrating mirror element taken along the line 1000-1000 in Fig. 2;
Fig. 4 is a sectional view of the vibrating mirror element taken along the line 2000-2000 in Fig. 2;
Fig. 5 is a sectional view of the vibrating mirror element taken along the line 3000-3000 in Fig. 2;
Fig. 6 is an enlarged sectional view showing a portion around a piezoelectric element of the vibrating mirror element shown in Figs. 3 to 5;
Fig. 7 is a diagram for illustrating a method of driving the vibrating mirror element according to the embodiment of the present invention;
Fig. 8 is a diagram for illustrating the method of driving the vibrating mirror element as viewed from a direction G in Fig. 7;
Fig. 9 is a diagram for illustrating the method of driving the vibrating mirror element as viewed from a direction H in Fig. 7;
Fig. 10 is a diagram for illustrating the method of driving the vibrating mirror element according to the embodiment of the present invention;
Fig. 11 is a diagram for illustrating the method of driving the vibrating mirror element as viewed from a direction G in Fig. 10;
Fig. 12 is a diagram for illustrating the method of driving the vibrating mirror element as viewed from a direction H in Fig. 10;
Fig. 13 is a plan view showing the overall structure of a vibrating mirror element according to Example 2 of the present invention;
Fig. 14 is a plan view showing the overall structure of a vibrating mirror element according to comparative example 1 of the present invention;
Fig. 15 is a diagram for illustrating a driven state of the vibrating mirror element according to comparative example 1 of the present invention;
Fig. 16 is a diagram for illustrating a driven state of the vibrating mirror element according to each of Examples 1 and 2 of the present invention;
Fig. 17 is a plan view showing the overall structure of a vibrating mirror element according to a first modification of the embodiment of the present invention; and
Fig. 18 is a plan view showing the overall structure of a vibrating mirror element according to a second modification of the embodiment of the present invention.

An embodiment of the present invention is now described with reference to the drawings.

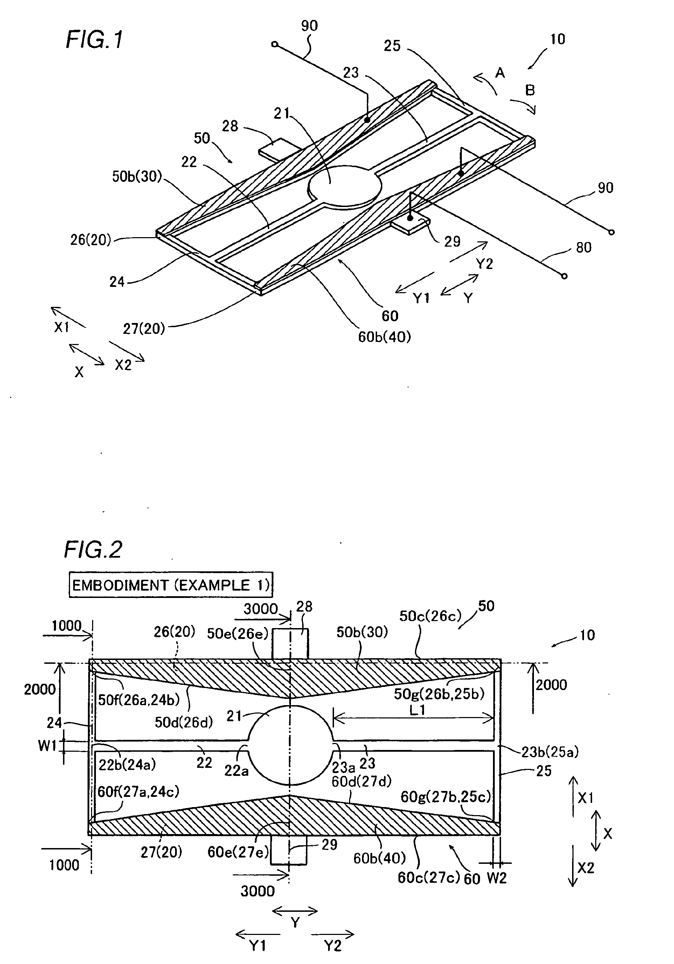

First, the structure of a vibrating mirror element 10 according to the embodiment of the present invention is described with reference to Figs. 1 to 6.

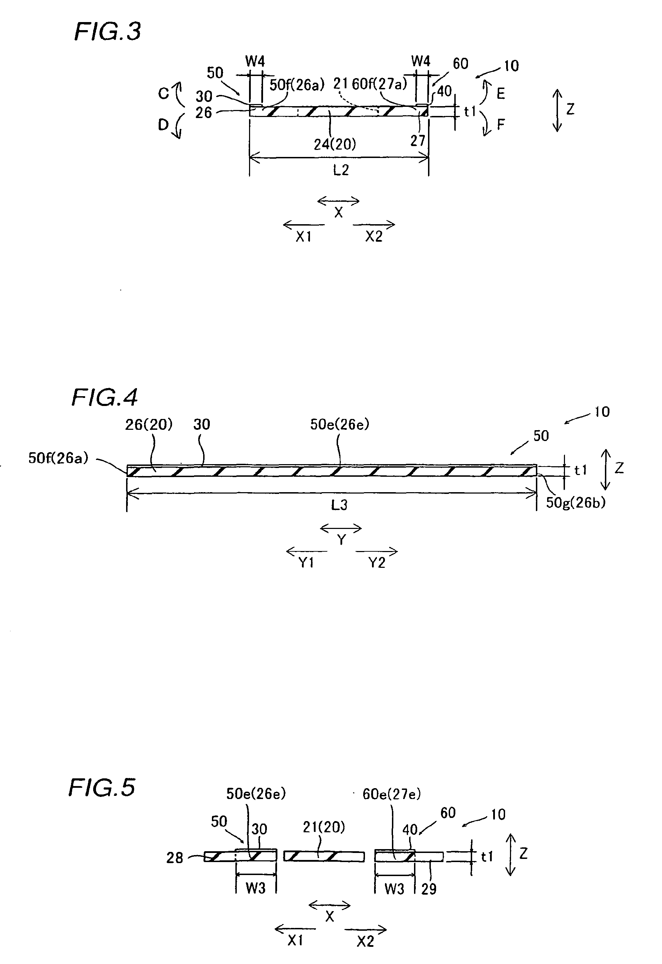

The vibrating mirror element 10 according to the embodiment of the present invention is constituted of a substrate 20 and piezoelectric elements 30 and 40 arranged on the substrate 20, as shown in Figs. 1 and 2. The substrate 20 includes a mirror portion 21 reflecting light, torsion bars 22 and 23 having identical shapes, bars 24 and 25 having identical shapes, a movable portion 26 formed on the side of a direction X1, and another movable portion 27, having a shape identical to that of the movable portion 26, formed on the side of a direction X2. The torsion bar 22 and the bar 24 are formed on the side of the mirror portion 21 in a direction Y1, while the torsion bar 23 and the bar 25 are formed on the side of the mirror portion 21 in a direction Y2. The substrate 20 further includes fixed portions 28 and 29 on the side of the movable portion 26 in the direction X1 and on the side of the movable portion 27 in the direction X2 respectively. In other words, the mirror portion 21, the torsion bars 22 and 23, the bars 24 and 25, the movable portions 26 and 27 and the fixed portions 28 and 29 are integrally formed. The substrate 20 has a thickness t1 of about 60 µm in a direction Z, as shown in Figs. 3 to 5. The torsion bars 22 and 23 are examples of the "first beam portion" and the "beam portion" in the present invention respectively, and the bars 24 and 25 are examples of the "second beam portion" and the "beam portion" in the present invention respectively.

As shown in Fig. 2, the mirror portion 21 of the substrate 20 has a circular shape of about 1.0 mm in diameter in plan view. The mirror portion 21 is connected with an end portion 22a of the torsion bar 22 on the side of the direction Y2 on the side of the direction Y1 of a straight line passing through the center of the mirror portion 21 and extending in the direction Y, and connected with an end portion 23a of the torsion bar 23 on the side of the direction Y1 on the side of the direction Y2 of the straight line. The torsion bars 22 and 23 are formed to extend on the straight line passing through the center of the mirror portion 21 and extending in the direction Y respectively. The mirror portion 21 is inclined by the torsion bars 22 and 23 in directions A and B (see Fig. 1), and supported by the torsion bars 22 and 23 to be vibratile. The torsion bars 22 and 23 are formed to be torsionally deformable and resonatable with the mirror portion 21. Thus, the mirror portion 21 is formed to be inclined by resonance in excess of the angle of inclination of the bars 24 and 25. As a result, the mirror portion 21 is so formed that, when a laser beam or the like is applied to the mirror portion 21, the angle of reflection of reflected light varies with the angle of inclination of the mirror portion 21. The torsion bars 22 and 23 have a length L1 of about 1.9 mm in the direction Y and a width W1 of about 150 µm in the direction X respectively. The length L1 of the torsion bars 22 and 23 in the direction Y may simply be at least about 1.4 mm and not more than about 1.9 mm, and the width W1 of the torsion bars 22 and 23 in the direction X may simply be at least about 100 µm and not more than about 250 µm.

The bar 24 is perpendicularly connected with an end portion 22b of the torsion bar 22 on the side of the direction Y1 on a central portion 24a of the bar 24 in the direction X in plan view. The bar 25 is perpendicularly connected with an end portion 23b of the torsion bar 23 on the side of the direction Y2 on a central portion 25a of the bar 25 in the direction X in plan view. The bars 24 and 25 have a length L2 of about 1.9 mm in the direction X as shown in Fig. 3, and have a width W2 of about 100 µm in the direction Y as shown in Fig. 2. The length L2 of the bars 24 and 25 in the direction X may simply be at least about 1.5 mm and not more than about 2.2 mm, and the width W2 of the bars 24 and 25 in the direction Y may simply be at least about 100 µm and not more than about 250 µm. The bars 24 and 25 are formed to be inclinable in the direction X and torsionally deformable by deformation of the movable portions 26 and 27 (driving portions 50 and 60 described later).

As shown in Fig. 2, the movable portions 26 and 27 are formed to extend in the direction Y which is the longitudinal direction. As shown in Fig. 4, the movable portions 26 and 27 (see Fig. 2) have a length L3 of about 5.0 mm in the direction Y respectively. The length L3 of the movable portions 26 and 27 in the direction Y may simply be at least about 4.0 mm and not more than about 6.0 mm.

According to this embodiment, an end portion 24b of the bar 24 on the side of the direction X1 and an end portion 25b of the bar 25 on the side of the direction X1 are perpendicularly connected with end portions 26a and 26b of the movable portion 26 on the sides of the directions Y1 and Y2 respectively in plan view, as shown in Fig. 2. An end portion 24c of the bar 24 on the side of the direction X2 and an end portion 25c of the bar 25 on the side of the direction X2 are perpendicularly connected with end portions 27a and 27b of the movable portion 27 on the sides of the directions Y1 and Y2 respectively in plan view. Thus, the bar 24 is connected to the end portions 26a and 27a of the movable portions 26 and 27 on the side of the direction Y1 respectively, while the bar 25 is connected to the end portions 26b and 27b of the movable portions 26 and 27 on the side of the direction Y2 respectively. The bars 24 and 25 are connected to intersect (direction X) with the longitudinal direction of the movable portions 26 and 27 respectively.

According to this embodiment, a side surface portion 26c of the movable portion 26 on the side of the direction X1 is formed to linearly extend in the direction Y parallelly to the straight line passing through the center of the mirror portion 21 and extending in the direction Y. A side surface portion 26d of the movable portion 26 on the side of the direction X2 is formed to be continuously and linearly inclined in the direction X1 from a central portion 26e toward the end portions 26a and 26b of the movable portion 26. The movable portion 26 is so formed that the side of the direction Y1 and the side of the direction Y2 are mirror-symmetrical with respect to the central portion 26e. In other words, the movable portion 26 is so formed that the width thereof is gradually reduced from the central portion 26e toward the end portions 26a and 26b. The width of the end portion 26a in the direction X is identical to the width of the end portion 26b in the direction X, and the movable portion 26 is so formed that the width thereof is minimized in the direction X. The width W3 of the central portion 26e in the direction X is about 500 µm as shown in Fig. 5, while the width W4 of the end portions 26a and 26b (see Fig. 2) of the movable portion 26 in the direction X is about 150 µm, as shown in Fig. 3. In other words, the movable portion 26 is so shaped that the central portion 26e protrudes toward the side of the direction X2 where the torsion bars 22 and 23 and the bars 24 and 25 are positioned.

According to this embodiment, a side surface portion 27c of the movable portion 27 on the side of the direction X2 is formed to linearly extend in the direction Y parallelly to the straight line passing through the center of the mirror portion 21 and extending in the direction Y. A side surface portion 27d of the movable portion 27 on the side of the direction X1 is formed to be continuously and linearly inclined in the direction X2 from a central portion 27e toward the end portions 27a and 27b of the movable portion 27. The movable portion 27 is so formed that the side of the direction Y1 and the side of the direction Y2 are mirror-symmetrical with respect to the central portion 27e. In other words, the movable portion 27 is so formed that the width thereof is gradually reduced from the central portion 27e toward the end portions 27a and 27b. The width of the end portion 27a in the direction X is identical to the width of the end portion 27b in the direction X, and the movable portion 27 is so formed that the width thereof is minimized in the direction X. The width W3 of the central portion 27e in the direction X is about 500 µm as shown in Fig. 5, while the width W4 of the end portions 27a and 27b (see Fig. 2) of the movable portion 27 in the direction X is about 150 µm, as shown in Fig. 3. In other words, the movable portion 27 is so shaped that the central portion 27e protrudes toward the side of the direction X1 where the torsion bars 22 and 23 and the bars 24 and 25 are positioned.

The widths W3 of the central portions 26e and 27e of the movable portions 26 and 27 in the direction X may simply be at least about 500 µm and not more than about 900 µm respectively, and the width W4 of the end portions 26a and 26b of the movable portion 26 in the direction X and the width W4 of the end portions 27a and 27b of the movable portion 27 in the direction X may simply be at least about 150 µm and not more than about 300 µm respectively.

The width W1 of the torsion bars 22 and 23 and the width W2 of the bars 24 and 25 are rendered smaller than the width W3 of the central portions 26e and 27e of the movable portions 26 and 27.

As shown in Fig. 2, the fixed portion 28 protruding in the direction X1 is formed on the side surface portion 26c of the central portion 26e of the movable portion 26 on the side of the direction X1. The fixed portion 29 protruding in the direction X2 is formed on the side surface portion 27c of the central portion 27e of the movable portion 27 on the side of the direction X2. The fixed portions 28 and 29 are positioned on the sides of the mirror portion 21 in the directions X1 and X2 respectively, and so formed that the centers of the fixed portions 28 and 29 are positioned on a line extending from the center of the mirror portion 21 in the direction X respectively. Further, the central portions 26e and 27e of the movable portions 26 and 27 are also positioned on the line extending from the center of the mirror portion 21 in the direction X.

The fixed portions 28 and 29 are fixed to bases (not shown) with an ultraviolet curing adhesive or the like respectively, formed to function as fixed ends when the movable portions 26 and 27 (driving portions 50 and 60) are concavely or convexly deformed to vibrate, and provided in the vicinity of central portions 50e and 60e, described later, of the driving portions 50 and 60 respectively.

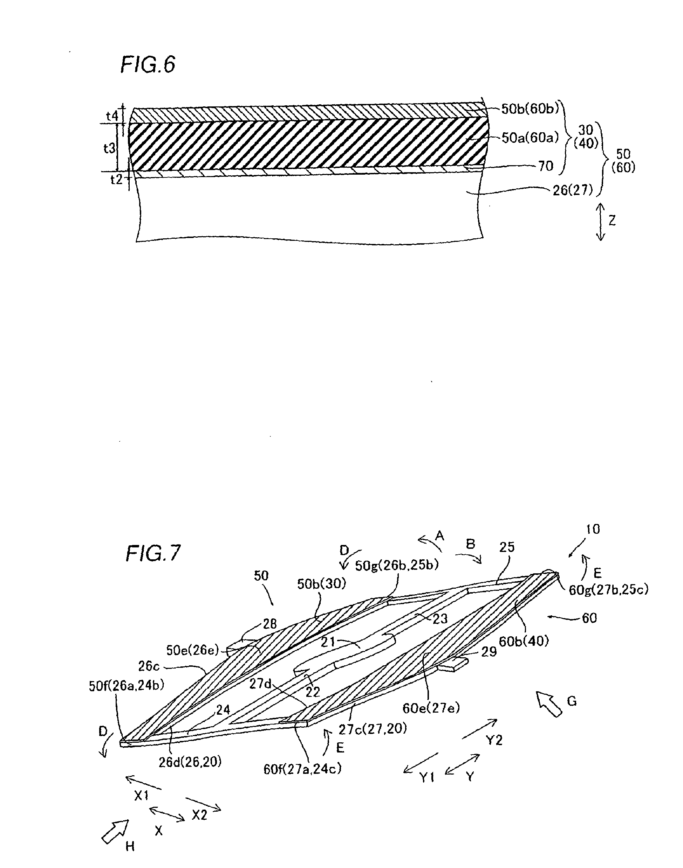

As shown in Figs. 3 and 5, piezoelectric elements 30 and 40 are formed substantially on the overall upper surfaces of the movable portions 26 and 27 of the substrate 20 respectively. The movable portion 26 and the piezoelectric element 30 form the driving portion 50, while the movable portion 27 and the piezoelectric element 40 form the driving portion 60. More specifically, a lower electrode 70 having a thickness t2 of about 120 nm in the direction Z is formed on the upper surfaces of the movable portions 26 and 27 of the substrate 20, as shown in Fig. 6. The lower electrode 70 is formed not only on the upper surfaces of the movable portions 26 and 27, but also over the entire surface of the substrate 20. Thus, the piezoelectric elements 30 and 40 can be wired to the lower electrode 70 on arbitrary portions of the substrate 20. As shown in Fig. 1, the lower electrode 70 is electrically connected with an external device by a terminal 80 on the upper surface of the fixed portion 29.

Piezoelectric bodies 50a and 60a having a thickness t3 of about 3 µm in the direction Z are formed substantially over the entire upper surfaces of portions of the lower electrode 70 located on the upper surfaces of the movable portions 26 and 27 respectively. The piezoelectric bodies 50a and 60a are made of lead zirconate titanate (PZT), and polarized in the thickness direction (direction Z), to be expanded/contracted in the direction Y (see Fig. 4) when voltages are applied thereto.

Upper electrodes 50b and 60b having a thickness t4 of about 500 nm in the direction Z are formed substantially over the entire upper surfaces of the piezoelectric bodies 50a and 60a respectively. The lower electrode 70, the piezoelectric body 50a and the upper electrode 50b form the piezoelectric element 30 on the side of the vibrating mirror element 10 in the direction X1 (see Fig. 3), while the movable portion 26 and the piezoelectric element 30 form the driving portion 50. On the other hand, the lower electrode 70, the piezoelectric element 60a and the upper electrode 60b form the piezoelectric element 40 on the side of the vibrating mirror element 10 in the direction X2 (see Fig. 3), while the movable portion 27 and the piezoelectric element 40 form the driving portion 60. As shown in Fig. 1, the upper electrodes 50b and 60b are electrically connected with external devices by terminals 90 respectively. The driving portion 50 is an example of the "first driving portion" in the present invention, and the driving portion 60 is an example of the "second driving portion" in the present invention.

According to this embodiment, the driving portions 50 and 60 have shapes identical to those of the movable portions 26 and 27 in plan view, as shown in Fig. 2. Namely, a side surface portion 50c of the driving portion 50 on the side of the direction X1 is formed to linearly extend in the direction Y, while a side surface portion 50d on the side of the direction X2 is formed to be continuously inclined in the direction X1 from the central portion 50e toward end portions 50f and 50g. In other words, the driving portion 50 is so formed that the width thereof is reduced from the central portion 50e toward the end portions 50f and 50g. The width of the end portion 50f in the direction X is identical to the width of the end portion 50g in the direction X, and is minimized on the driving portion 50. The side surface portion 50c is an example of the "side surface" in the present invention.

A side surface portion 60c of the driving portion 60 on the side of the direction X2 is formed to linearly extend in the direction Y, while a side surface portion 60d on the side of the direction X1 is formed to be continuously inclined in the direction X2 from the central portion 60e toward end portions 60f and 60g. In other words, the driving portion 60 is so formed that the width thereof is reduced from the central portion 60e toward the end portions 60f and 60g. The width of the end portion 60f in the direction X is identical to the width of the end portion 60g in the direction X, and minimized on the driving portion 60. The side surface portion 60c is an example of the "side surface" in the present invention.

According to this embodiment, the bar 24 is connected to the end portions 50f and 60f corresponding to the end portions 26a and 27b of the movable portions 26 and 27 on the side of the direction Y1 respectively, while the bar 25 is connected to the end portions 50g and 60g corresponding to the end portions 26b and 27b of the movable portions 26 and 27 on the side of the direction Y2 respectively. The end portions 50f and 50g are examples of the "first connecting portion" and the "connecting portion" in the present invention respectively, and the end portions 60f and 60g are examples of the "second connecting portion" and the "connecting portion" in the present invention respectively.

The central portions 50e and 60e are formed to serve as fixed ends of the driving portions 50 and 60 respectively, due to the fixed portions 28 and 29 provided in the vicinity of the central portions 50e and 60e, described later, of the driving portions 50 and 60 respectively. The driving portion 50 has a substantially symmetrical shape with respect to a straight line (line 3000-3000 in Fig. 2) passing through the central portion 50e and extending in the direction Y, while the driving portion 60 has a substantially symmetrical shape with respect to a straight line (line 3000-3000 in Fig. 2) passing through the central portion 60e and extending in the direction Y.

According to this embodiment, the driving portions 50 and 60 are formed to be concavely and convexly deformable in the direction Z with fixed ends defined by the central portions 50e and 60e in the vicinity of the fixed portions 28 and 29 and free ends defined by the end portions 50f and 60f of the driving portions 50 and 60 on the side of the direction Y1 and the end portions 50g and 60g on the side of the direction Y2 when voltages are applied to the upper electrodes 50b and 60b (see Fig. 6) and the lower electrode 70 (see Fig. 6). More specifically, when voltages for contracting the piezoelectric bodies 50a and 60a are applied to the upper electrodes 50b and 60b and the lower electrode 70, the piezoelectric bodies 50a and 60a arranged on the upper surfaces of the movable portions 26 and 27 are deformed to warp the end portions 50f, 50g, 60f and 60g serving as the free ends upward. Thus, the driving portions 50 and 60 are so concavely deformed that the central portions 50e and 60e serving as the fixed ends are positioned below the end portions 50f, 50g, 60f and 60g serving as the free ends.

When voltages for expanding the piezoelectric bodies 50a and 60a are applied to the upper electrodes 50b and 60b and the lower electrode 70, on the other hand, the piezoelectric bodies 50a and 60a arranged on the upper surfaces of the movable portions 26 and 27 are deformed to warp the end portions 50f, 50g, 60f and 60g serving as the free ends downward. Thus, the driving portions 50 and 60 are so convexly deformed that the central portions 50e and 60e serving as the fixed ends are positioned above the end portions 50f, 50g, 60f and 60g serving as the free ends.

According to this embodiment, the driving portion 50 is so formed that the width thereof is continuously reduced from the central portion 50e toward the end portions 50f and 50g. When the driving portion 50 is concavely deformed, therefore, force in a direction C is applied to the end portions 50f and 50g (see Fig. 2) of the driving portion 50 to twist the same in the direction C, as shown in Fig. 3. When the driving portion 50 is convexly deformed, on the other hand, force in a direction D is applied to the end portions 50f and 50g of the driving portion 50 to twist the same in the direction D.

According to this embodiment, further, the driving portion 60 is so formed that the width thereof is continuously reduced from the central portion 60e toward the end portions 60f and 60g, as shown in Fig. 2. When the driving portion 60 is concavely deformed, therefore, force in a direction E is applied to the end portions 60f and 60g (see Fig. 2) of the driving portion 60 to twist the same in the direction E, as shown in Fig. 3. When the driving portion 60 is convexly deformed, on the other hand, force in a direction F is applied to the end portions 60f and 60g of the driving portion 60 to twist the same in the direction F.

The voltages applied to the upper electrodes 50b and 60b and the lower electrode 70 mainly have sinusoidal waveforms. Thus, the driving portions 50 and 60 repeat vibratile movement of being concavely deformed from undeformed states, returning to the undeformed states again and thereafter being convexly deformed. The phases of a voltage V1 applied to the upper electrode 50b of the driving portion 50 and the lower electrode 70 and a voltage V2 applied to the upper electrode 60b of the driving portion 60 and the lower electrode 70 are reverse to each other. Further, the frequencies of the sinusoidal voltages V1 and V2 and the resonance frequency of the mirror portion 21, the torsion bars 22 and 23 and the driving portions 50 and 60 substantially coincide with each other. Thus, the mirror portion 21 and the torsion bars 22 and 23 so resonate that the mirror portion 21 can be vibrated in the directions A and B (see Fig. 1) at an angle larger than the angle of inclination of the bars 24 and 25.

A driving operation of the vibrating mirror element 10 according to the embodiment of the present invention is now described with reference to Figs. 6 to 12.

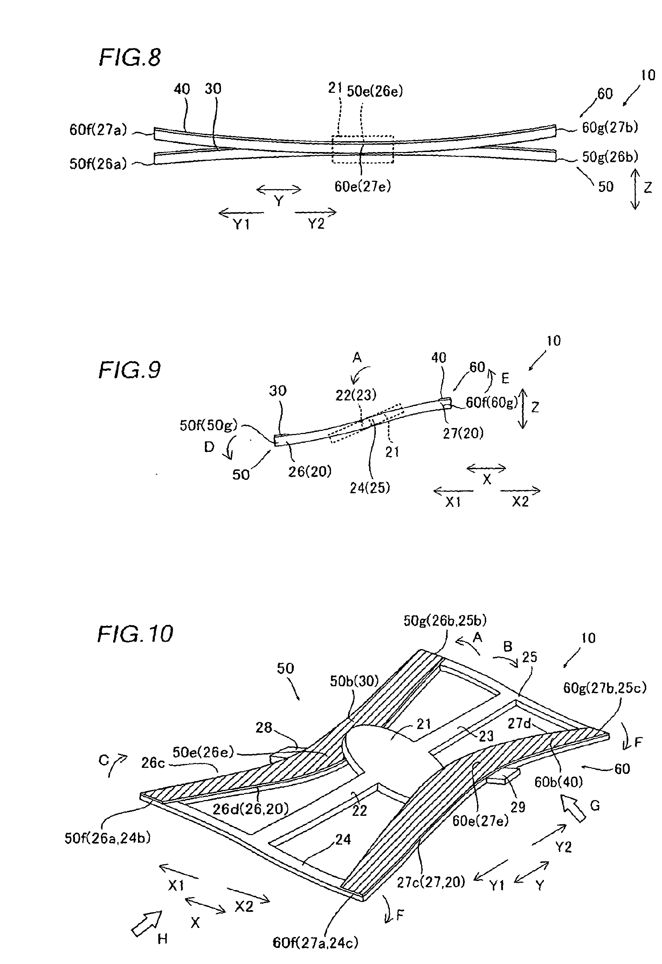

When the voltage V1 (about 8 V) for expanding the piezoelectric body 50a is applied to the upper electrode 50b and the lower electrode 70 while the voltage V2 (about 8 V) for contracting the piezoelectric body 60a is applied to the upper electrode 60b and the lower electrode 70 as shown in Fig. 6, the driving portion 50 is so convexly deformed that the central portion 50e serving as the fixed end is positioned above the end portions 50f and 50g serving as the free ends and the driving portion 60 is so concavely deformed that the central portion 60e serving as the fixed end is positioned below the end portions 60f and 60g serving as the free ends, as shown in Figs. 7 and 8.

According to this embodiment, the driving portion 50 is so formed that the width thereof is continuously reduced from the central portion 50e toward the end portions 50f and 50g while the driving portion 60 is so formed that the width thereof is continuously reduced from the central portion 60e toward the end portions 60f and 60g, whereby the end portions 50f and 50g of the driving portion 50 are further twisted in the direction D and the end portions 60f and 60g of the driving portion 60 are further twisted in the direction E, as shown in Fig. 9.

Thus, the end portions 26a and 26b of the movable portion 26 positioned on a lower portion of the driving portion 50 are positioned downward as compared with the end portions 27a and 27b of the movable portion 27 positioned on a lower portion of the driving portion 60 as shown in Fig. 7, whereby the bars 24 and 25 are inclined downward from the side of the movable portion 27 toward the side of the movable portion 26 (direction X1), and torsionally deformed in the direction A. Following inclination of the bars 24 and 25, the torsion bars 22 and 23 are inclined downward from the side of the movable portion 27 toward the side of the movable portion 26 (direction X1). Further, the resonance frequency of the mirror portion 21 and the torsion bars 22 and 23 and the frequencies of the sinusoidal voltages V1 and V2 substantially coincide with each other so that the mirror portion 21 and the torsion bars 22 and 23 resonate (resonance frequency: about 21 kHz), whereby force is applied to the torsion bars 22 and 23 to twist the same in the direction A at an angle larger than the angle of inclination of the bars 24 and 25. Thus, the mirror portion 21 is inclined in the direction A by about 10° at a maximum.

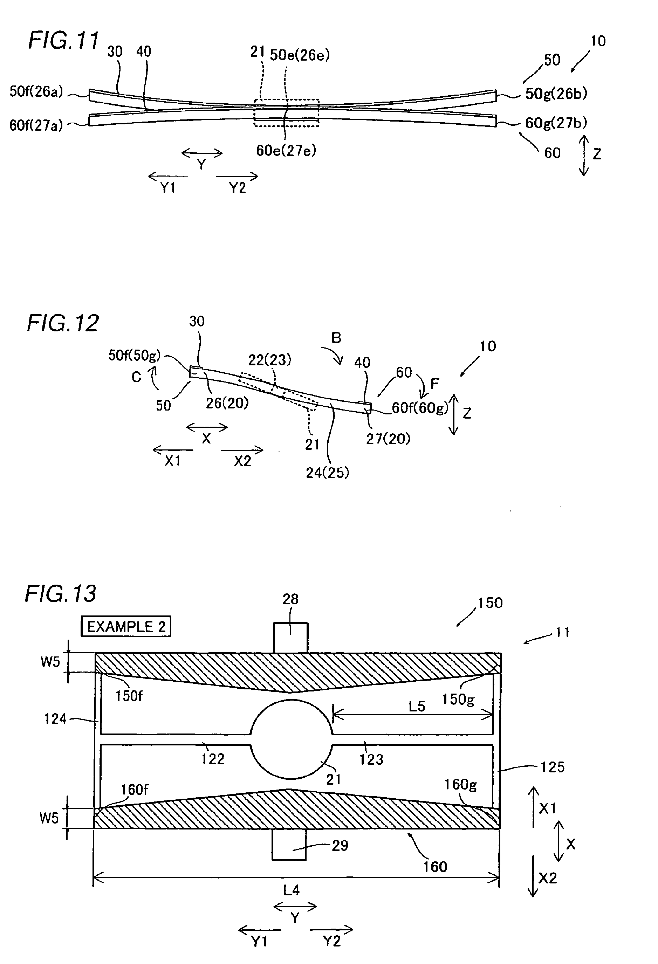

When the voltage V1 (about 8 V) for contracting the piezoelectric body 50a is applied to the upper electrode 50b and the lower electrode 70 and the voltage V2 (about 8 V) for expanding the piezoelectric body 60a is applied to the upper electrode 60b and the lower electrode 70 as shown in Fig. 6, on the other hand, the driving portion 50 is so concavely deformed that the central portion 50e serving as the fixed end is positioned below the end portions 50f and 50g serving as the free ends and the driving portion 60 is so convexly deformed that the central portion 60e serving as the fixed end is positioned above the end portions 60f and 60g serving as the free ends, as shown in Figs. 10 and 11.

According to this embodiment, the driving portion 50 is so formed that the width thereof is continuously reduced from the central portion 50e toward the end portions 50f and 50g while the driving portion 60 is so formed that the width thereof is continuously reduced from the central portion 60e toward the end portions 60f and 60g, whereby the end portions 50f and 50g of the driving portion 50 are further twisted in the direction C while the end portions 60f and 60g of the driving portion 60 are further twisted in the direction F, as shown in Fig. 12.

Thus, the end portions 26a and 26b of the movable portion 26 positioned on the lower portion of the driving portion 50 are positioned upward as compared with the end portions 27a and 27b of the movable portion 27 positioned on the lower portion of the driving portion 60 as shown in Fig. 10, whereby the bars 24 and 25 are inclined downward from the side of the movable portion 26 toward the side of the movable portion 27 (direction X2) respectively and torsionally deformed in the direction B. Following inclination of the bars 24 and 25, the torsion bars 22 and 23 are inclined downward from the side of the movable portion 26 toward the side of the movable portion 27 (direction X2). Further, the resonance frequency of the mirror portion 21 and the torsion bars 22 and 23 and the frequencies of the sinusoidal voltages V1 and V2 substantially coincide with each other so that the mirror portion 21 and the torsion bars 22 and 23 resonate (resonance frequency: about 21 kHz), whereby force is applied to the torsion bars 22 and 23 to twist the same in the direction B at an angle larger than the angle of inclination of the bars 24 and 25. Thus, the mirror portion 21 is inclined in the direction B by about 10° at a maximum.

The voltages applied to the upper electrodes 50b and 60b and the lower electrode 70 mainly have sinusoidal waveforms, whereby the driving portions 50 and 60 repeat the vibratile movement of being concavely deformed from the undeformed states, returning to the undeformed states again and thereafter being convexly deformed. Consequently, the sinusoidal voltage V1 (about 8 V) is applied to the upper electrode 50b of the driving portion 50 and the lower electrode 70 while the sinusoidal voltage V2 (about 8 V) having the phase reverse to that of the voltage V1 (about 8 V) is applied to the upper electrode 60b of the driving portion 60 and the lower electrode 70, whereby the mirror portion 21 supported by the torsion bars 22 and 23 in a vibratile manner repeats vibratile movement in the directions A and B at the angle of inclination of about 10° at a maximum through deformation of the driving portions 50 and 60, the bars 24 and 25 and the torsion bars 22 and 23. Thus, the vibrating mirror element 10 can one-dimensionally scan reflected light of a laser beam or the like applied to the mirror portion 21.

According to this embodiment, as hereinabove described, the width W4 of the end portions 50f, 50g, 60f and 60g of the driving portions 50 and 60 is rendered smaller than the width of the portions of the driving portions 50 and 60 other than the end portions 50f, 50g, 60f and 60g so that the end portions 50f, 50g, 60f and 60g of the driving portions 50 and 60 having the small width W4 are easily torsionally deformed by deflection in the direction orthogonal to the longitudinal direction, whereby the quantities of torsional deformation of the end portions 50f, 50g, 60f and 60g can be increased when the driving portions 50 and 60 are deformed while the bars 24 and 25 are connected to the end portions 50f, 50g, 60f and 60g. Thus, the bars 24 and 25 connected to the driving portions 50 and 60 can be largely inclined and torsionally deformed, whereby the angle of inclination of the torsion bars 22 and 23 and that of the mirror portion 21 can be enlarged. Further, the mirror portion 21 is not directly arranged on the driving portions 50 and 60 while the driving portions 50 and 60 are not directly arranged on the bars 24 and 25, whereby the mirror portion 21 can be resonated. Thus, the angle of inclination of the mirror portion 21 can be further enlarged. In addition, the quantities of torsional deformation from reference portions are increased on the end portions 50f, 50g, 60f and 60g of the driving portions 50 and 60 beyond those on portions other than the end portions 50f, 50g, 60f and 60g, whereby the angle of inclination of the mirror portion 21 can be further enlarged by providing the connecting portions on the end portions 50f, 50g, 60f and 60g. Further, the mirror portion 21 can be inclined through the bars 24 and 25 and the torsion bars 22 and 23 by deformation of the driving portions 50 and 60, whereby the mirror portion 21 can be vibrated by alternately changing the direction for inclining the mirror portion 21.

According to this embodiment, as hereinabove described, the bars 24 and 25 are connected with the driving portions 50 and 60 from the direction (direction

X) orthogonal to the longitudinal direction of the driving portions 50 and 60 on the end portions 50f, 50g, 60f and 60g while the side surface portions 50c and 60c of the driving portions 50 and 60 are formed to extend in the direction Y, whereby the side surfaces of the driving portions 50 and 60 on the sides of the end portions 50f, 50g, 60f and 60g are inclined along the longitudinal direction (direction Y) of the driving portions 50 and 60 so that the width W4 of the end portions 50f, 50g, 60f and 60g of the driving portions 50 and 60 is smaller than the width of the portions of the driving portions 50 and 60 other than the end portions 50f, 50g, 60f and 60g. Thus, the end portions 50f, 50g, 60f and 60g can be torsionally deformed to be deflected oppositely to the bars 24 and 25, whereby inclination and resonance of the mirror portion 21 can be further enlarged.

According to this embodiment, as hereinabove described, the torsion bars 22 and 23 are formed to extend on the straight line passing through the center of the mirror portion 21 and extending in the direction Y respectively, whereby the angle of inclination of the mirror portion 21 can be more enlarged as compared with a case where the torsion bars 22 and 23 are not arranged on the straight line passing through the center of the mirror portion 21.

According to this embodiment, as hereinabove described, the movable portions 26 and 27 are formed to extend parallelly to the straight line passing through the center of the mirror portion 21 and extending in the direction Y respectively so that the driving force of the driving portions 50 and 60 can be substantially uniformly applied to the mirror portion 21 through the torsion bars 22 and 23, whereby inclination of the mirror portion 21 can be more reliably controlled.

According to this embodiment, as hereinabove described, the driving portions 50 and 60 are so formed that the widths thereof are continuously reduced from the central portions 50e and 60e in the vicinity of the fixed portions 28 and 29 toward the end portions 50f, 50g, 60f and 60g respectively in plan view so that the width W3 of the central portions 50e and 60e of the driving portions 50 and 60 can be increased, whereby the driving portions 50 and 60 can be stably driven in fixed states. Further, the distance between the central portion 50e and the end portion 50f and that between the central portion 50e and the end portion 50g can be rendered identical to each other while the distance between the central portion 60e and the end portion 60f and that between the central portion 60e and the end portion 60g can be rendered identical to each other, whereby the quantities of deformation of the end portions 50f and 50g can be rendered identical to each other while the quantities of deformation of the end portions 60f and 60g can also be rendered identical to each other. Thus, the quantities of deformation applied to the bars 24 and 25 can be inhibited from differing from each other due to different quantities of deformation on the end portions 50f, 50g, 60f and 60g of the driving portions 50 and 60, whereby breakage of the bars 24 and 25 can be suppressed.

According to this embodiment, as hereinabove described, the side surface portion 26c (27c) of the movable portion 26 (27) on the side of the direction X1 (X2) is formed to be continuously and linearly inclined in the direction X1 (X2) from the central portion 26e (27e) toward the end portions 26a (27a) and 26b (27b) of the movable portion 26 (27) so that the width of the driving portion 50 (60) substantially constantly changes, whereby the portion of the driving portion 50 (60) varying in width can be more prevented from application of stress.

According to this embodiment, as hereinabove described, the movable portion 26 is so shaped that the central portion 26e protrudes toward the side of the direction X2 where the torsion bars 22 and 23 and the bars 24 and 25 are positioned while the movable portion 27 is so shaped that the central portion 27e protrudes toward the side of the direction X1 where the torsion bars 22 and 23 and the bars 24 and 25 are positioned so that the end portions 50f, 50g, 60f and 60g of the driving portions 50 and 60 can be torsionally deformed to be more deflected toward the sides of the directions X1 and X2, whereby the angle of inclination of the mirror portion 21 can be further enlarged.

According to this embodiment, as hereinabove described, the width W1 of the torsion bars 22 and 23 and the width W2 of the bars 24 and 25 are rendered smaller than the width W3 of the central portions 26e and 27e of the movable portions 26 and 27 so that the torsion bars 22 and 23 and the bars 24 and 25 can be easily deformed, whereby the angle of inclination of the mirror portion 21 can be further enlarged.

According to this embodiment, as hereinabove described, the end portions 50f, 50g, 60f and 60g of the driving portions 50 and 60 connected with the bars 24 and 25 serve as the free ends while the driving portions 50 and 60 are so flexurally and torsionally deformed that the bars 24 and 25 connected to the end portions 50f, 50g, 60f and 60g are inclined and torsionally deformed, whereby the quantities of deformation of the end portions 50f, 50g, 60f and 60g can be further increased.

According to this embodiment, as hereinabove described, the driving portion 50 has the substantially symmetrical shape with respect to the straight line (line 3000-3000) passing through the central portion 50e and extending in the direction X' while the driving portion 60 has the substantially symmetrical shape with respect to the straight line (line 3000-3000) passing through the central portion 60e and extending in the direction X so that the quantities of deformation on the end portions 50f, 50g, 60f and 60g can be reliably rendered identical to each other, whereby the quantities of deformation applied to the bars 24 and 25 can be more inhibited from differing from each other due to different quantities of deformation on the end portions 50f, 50g, 60f and 60g. Thus, breakage of the bars 24 and 25 can be more suppressed.

According to this embodiment, as hereinabove described, the mirror portion 21, the torsion bars 22 and 23, the bars 24 and 25, the movable portions 26 and 27 and the fixed portions 28 and 29 are integrally formed so that connecting portions between the mirror portion 21, the torsion bars 22 and 23, the bars 24 and 25, the movable portions 26 and 27 and the fixed portions 28 and 29 may not be additionally bonded to each other, whereby the mirror portion 21, the torsion bars 22 and 23, the bars 24 and 25, the movable portions 26 and 27 and the fixed portions 28 and 29 can be easily formed, while the respective connecting portions can be inhibited from detachment resulting from deformation of the driving portions 50 and 60.

According to this embodiment, as hereinabove described, the piezoelectric elements 30 and 40 are formed substantially on the overall upper surfaces of the movable portions 26 and 27 respectively so that the driving force of the driving portions 50 and 60 can be enlarged, whereby the angle of inclination of the mirror portion 21 can be further enlarged.

According to this embodiment, as hereinabove described, the sinusoidal voltage V1 (about 8 V) is applied to the upper electrode 50b of the driving portion 50 and the lower electrode 70 while the sinusoidal voltage V2 (about 8 V) having the phase reverse to that of the voltage V1 (about 8 V) is applied to the upper electrode 60b of the driving portion 60 and the lower electrode 70 and the resonance frequency of the mirror portion 21 and the torsion bars 22 and 23 and the frequencies of the sinusoidal voltages V1 and V2 substantially coincide with each other so that the driving portions 50 and 60 can be deformed in electrically opposite directions while the resonance frequency of the mirror portion 21 and the torsion bars 22 and 23 and the frequencies of the sinusoidal voltages V1 and V2 substantially coincide with each other, whereby the angle of inclination of the mirror portion 21 can be further enlarged.

Simulations conducted in order to confirm the effects of the aforementioned embodiment of the present invention are now described with reference to Figs. 2, 6 and 13 to 16.

In these simulations, Examples 1 and 2 and comparative example 1 were examined. Example 1 corresponds to the vibrating mirror element 10 according to the embodiment of the present invention shown in Fig. 2. In a vibrating mirror element 11 according to Example 2 shown in Fig. 13, the lengths L4 of driving portions 150 and 160 in a direction Y were set to 6.0 mm respectively, while the lengths L5 of torsion bars 122 and 123 in the direction Y were set to 2.4 mm respectively. Further, the widths W5 of end portions 150f, 150g, 160f and 160g, serving as connecting portions between the driving portions 150 and 160 and bars 124 and 125, of the driving portions 150 and 160 in a direction X were set to 250 µm respectively by varying inclination of side surface portions 150d and 160d of the driving portions 150 and 160.

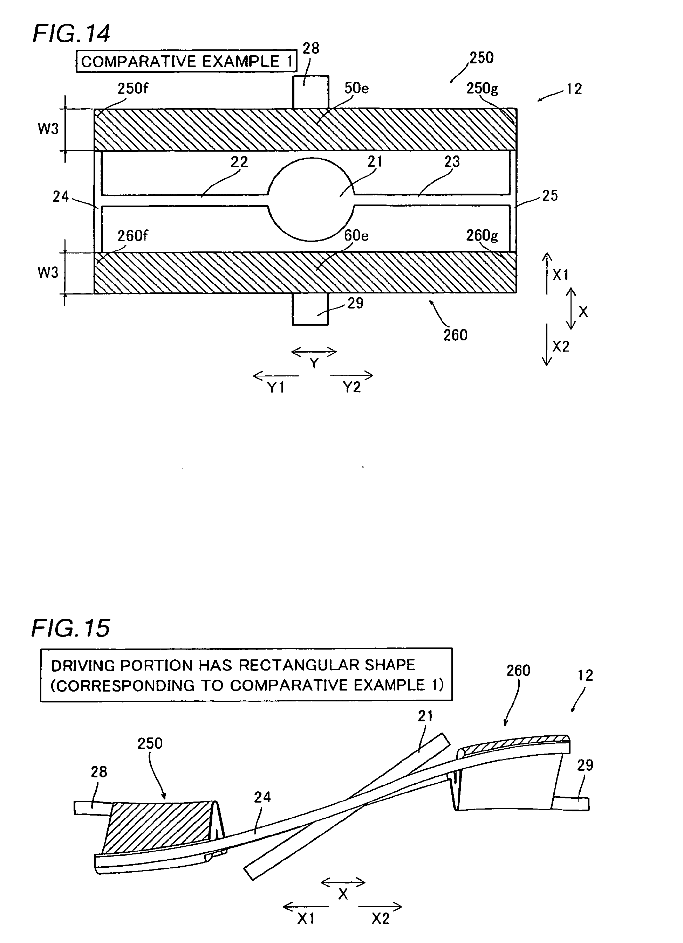

In a vibrating mirror element 12 according to comparative example 1 shown in Fig. 14, the width W3 of a central portion 50e of a driving portion 250 in a direction X and the width W3 of end portions 250f and 250g in the direction X were rendered identical (500 µm) to each other while the width W3 of a central portion 60e of a driving portion 260 in the direction X and the width W3 of end portions 260f and 260g in the direction X were also rendered identical (500 µm) to each other, so that the driving portions 250 and 260 had rectangular shapes extending in a direction Y in plan view. The structures of Example 2 and comparative example 1 were rendered identical to that of Example 1, except the varied parameters.

Results of simulations as to angles of inclination of mirror portions and resonance frequencies conducted by setting voltages applied to upper electrodes and lower electrodes to 8 V in Examples 1 and 2 and comparative example 1 shown in Figs. 2, 13 and 14 respectively are now described. The angle of inclination of each mirror portion was set to have a minus value when the mirror portion was inclined in a direction A and to have a plus value when the mirror portion was inclined in a direction B.

In the simulation of Example 1 shown in Fig. 2, the angle of inclination of the mirror portion was -10.9° to +10.9°, and the resonance frequency was 21950 Hz. In the simulation of Example 2 shown in Fig. 13, the angle of inclination of the mirror portion was -11.4° to +11.4°, and the resonance frequency was 16900 Hz. In the simulation of comparative example 1 shown in Fig. 14, the angle of inclination of the mirror portion was -6.6° to +6.6°, and the resonance frequency was 21180 Hz.

Comparing Examples 1 and 2 with each other from the aforementioned results of the simulations, it has been recognized that the angle of inclination of the mirror portion is slightly enlarged when the areas of the driving portions are increased as in Example 2. This is conceivably because the driving force of the driving portions depends on the areas of the driving portions. It has also been recognized that the resonance frequency is reduced when the widths of the end portions of the driving portions are increased as in Example 2. This is conceivably because the end portions are hard to torsionally deform due to the increased widths of the end portions. It has further been recognized that the resonance frequency is reduced when the lengths of the driving portions in the longitudinal direction are increased as in Example 2. This is conceivably because the amplitudes in the driving portions are so increased that the frequency of vibration on the driving portions is reduced.

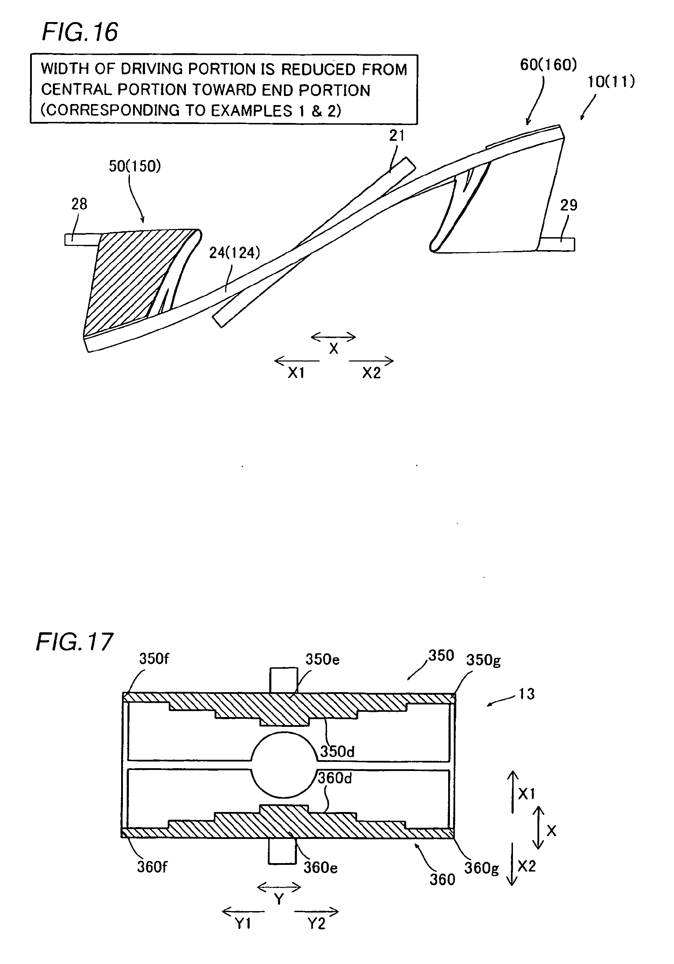

Comparing Example 1 and comparative example 1 with each other, it has been recognized that the angle of inclination of the mirror portion is enlarged when the widths of the driving portions are continuously reduced from the central portions toward both end portions as in Example 1. This is conceivably because the end portions of the driving portions are hardly twisted and hence inclination of the bars connected with the end portions of the driving portions substantially depends on deflection of the driving portions in the longitudinal direction when the driving portions are in the form of rectangles having constant widths as in comparative example 1 shown in Fig. 15 while the end portions of the driving portions are twisted in directions for further inclining the bars and hence inclination of the bars connected with the end portions of the driving portions depends on deflection of the driving portions in the longitudinal direction and torsional deformation of the end portions when the driving portions are so formed that the widths thereof are reduced from the central portions toward the end portions as in Example 1 shown in Fig. 16.

In the vibrating mirror element according to the present invention, both of the angle of inclination of the mirror portion and the resonance frequency are preferably enlarged, in consideration of enlargement of a scanning range and improvement of a scanning rate at the time of one-dimensionally scanning the reflected light of the laser beam or the like applied to the mirror portion. In other words, Example 1 corresponding to the vibrating mirror element 10 according to the embodiment of the present invention, capable of enlarging both of the angle of inclination of the mirror portion and the resonance frequency, is conceivably optimum.

Although the present invention has been described and illustrated in detail, it is clearly understood that the same is by way of illustration and example only and is not to be taken by way of limitation, the scope of the present invention being limited only by the terms of the appended claims, as interpreted by the description and drawings.

For example, while the driving portions 50 and 60 are so formed that the widths thereof are continuously reduced from the central portions 50e and 60e toward the end portions 50f (50g) and 60f (60g) respectively in the aforementioned embodiment, the present invention is not restricted to this. According to the present invention, side surface portions 350d and 360d of driving portions 350 and 360 may be deformed stepwise as in a vibrating mirror element 13 according to a first modification shown in Fig. 17, so that the widths of the driving portions 350 and 360 are reduced stepwise from central portions 350e and 360e toward end portions 350f (350g) and 360f (360g). According to this structure, connecting portions can be torsionally deformed to be deflected oppositely to the end portions 350f (350g) and 360f (360g) on steps, whereby beam portions (torsion bars and bars) can be more easily deformed. Thus, the angle of inclination of the mirror portion can be further enlarged. The number of the steps is not particularly restricted.

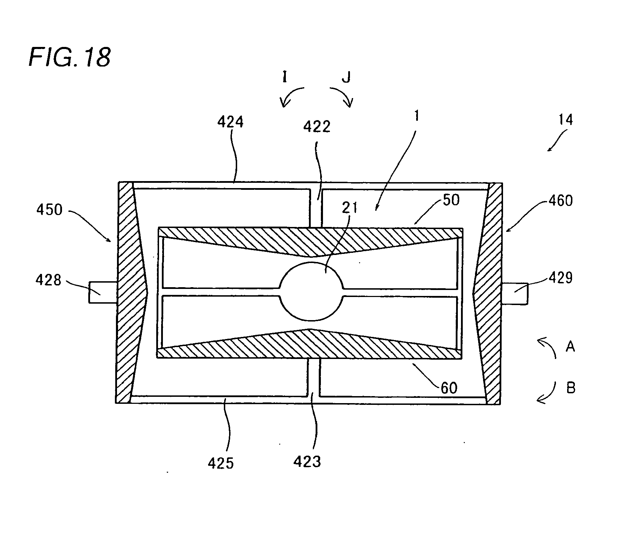

While the mirror portion 21 of the vibrating mirror element 10 is inclined only in the directions A and B (in a one-dimensional manner) in the aforementioned embodiment, the present invention is not restricted to this. According to the present invention, the mirror portion of the vibrating mirror element may alternatively be two-dimensionally inclined. As in a second modification shown in Fig. 18, for example, a vibrating mirror element 14 may be formed by replacing the pair of fixed portions 28 and 29 of the vibrating mirror element 10 according to the aforementioned embodiment with a pair of torsion bars 422 and 423, so that end portions of the pair of torsion bars 422 and 423 are perpendicularly connected with central portions of a pair of bars 424 and 425 respectively. Both end portions of the pair of bars 424 and 425 are perpendicularly connected with a pair of driving portions 450 and 460 having shapes similar to those of the driving portions 50 and 60 respectively, and fixed to bases (not shown) by a pair of fixed portions 428 and 429. Thus, the mirror portion 21 can be two-dimensionally inclined and vibrated in directions A and B and directions T and J.

While the side surface portion 26c (27d) of the movable portion 26 (27) on the side of tne direction X2 (X1) is formed to linearly extend in the direction Y in the aforementioned embodiment, the present invention is not restricted to this. According to the present invention, the side surface of the movable portion opposite to the bar may alternatively be inclined.

While the side surface portion 26d (27c) of the movable portion 26 (27) on the side of the direction X1 (X2) is formed to be continuously and linearly inclined in the direction X1 (X2) from the central portion 26e (27e) toward the end portions 26a (27a) and 26b (27b) of the movable portion 26 (27) in the aforementioned embodiment, the present invention is not restricted to this. According to the present invention, the side surface of the movable portion on the side of the bar may not be continuously inclined from the central portion toward the end portions.

While the piezoelectric bodies 50a and 60a are made of lead zirconate titanate (PZT) in the aforementioned embodiment, the present invention is not restricted to this. According to the present invention, the piezoelectric bodies may alternatively be made of a piezoelectric material, other than PZT, consisting of an oxide mainly composed of lead, titanium and/or zirconium or another piezoelectric material. For example, the piezoelectric bodies may be made of a piezoelectric material such as zinc oxide (ZnO), lead lanthanum zirconate titanate ((Pb,La)(Zr,Ti)O₃), potassium niobate (KNbO₃) or sodium niobate (NaNbO₃).

While the driving portions 50 and 60 and the bars 24 and 25 are connected with each other on the end portions 50f, 50g, 60f and 60g of the driving portions 50 and 60 in the aforementioned embodiment, the present invention is not restricted to this. According to the present invention, the driving portions and the bars may alternatively be connected with each other on positions other than the end portions of the driving portions.

While the "beam portion" in the present invention consists of the torsion bars 22 and 23 and the bars 24 and 25 in the aforementioned embodiment, the present invention is not restricted to this. According to the present invention, the "beam portion" may alternatively consist of either torsion bars or bars.

While the driving portions 50 and 60 are driven by the piezoelectric elements 30 and 40 respectively in the aforementioned embodiment, the present invention is not restricted to this. According to the present invention, the driving portions may alternatively be driven by driving sources other than the piezoelectric elements.

While the mirror portion 21 has a circular shape in plan view in the aforementioned embodiment, the present invention is not restricted to this. According to the present invention, the mirror portion may alternatively have a square shape or a rectangular shape in plan view.

While the mirror portion 21, the torsion bars 22 and 23, the bars 24 and 25, the movable portions 26 and 27 and the fixed portions 28 and 29 are integrally formed in the aforementioned embodiment, the present invention is not restricted to this. According to the present invention, the mirror portion, the torsion bars, the bars, the movable portions and the fixed portions may not be integrally formed, but a mirror portion, torsion bars, bars, movable portions and fixed portions consisting of separate members may alternatively be bonded to each other by adhesion or the like.

While the width W1 of the torsion bars 22 and 23 and the width W2 of the bars 24 and 25 are rendered smaller than the width W3 of the central portions 26e and 27e of the driving portions 50 and 60 in the aforementioned embodiment, the present invention is not restricted to this. According to the present invention, the width W1 of the torsion bars 22 and 23 and the width W2 of the bars 24 and 25 may alternatively be in excess of the width W3 of the central portions 26e and 27e of the driving portions 50 and 60.

While the piezoelectric elements 30 and 40 are formed substantially on the overall upper surfaces of the movable portions 26 and 27 in the aforementioned embodiment, the present invention is not restricted to this. According to the present invention, the piezoelectric elements may alternatively be only partially formed on the upper surfaces of the movable portions.

While the torsion bars 22 and 23 are formed to extend on the straight line passing through the center of the mirror portion 21 and extending in the direction Y in the aforementioned embodiment, the present invention is not restricted to this. According to the present invention, the torsion bars may not be formed to extend on the straight line passing through the center of the mirror portion and extending in the direction Y.

## Claims

1. A vibrating mirror element (10) comprising:
a mirror portion (21) reflecting light;
a beam portion (22, 23, 24, 25) being torsionally deformable connected to said mirror portion for supporting said mirror portion in a vibratile manner; and
a pair of driving portions (50, 60) having connecting portions (50f, 50g, 60f 60g) connected with said beam portion for driving said mirror portion through said torsionally deformable beam portion, wherein
the vibrating mirror element further includes a pair of supporting portions (28, 29) provided in the vicinity of central portions (50c, 60c) of said pair of driving portions in the longitudinal direction respectively for constituting supporting ends in vibration of said pair of driving portions and fixing said pair of driving portions; wherein,
the driving portions (50, 60) are formed to be concavely and convexly deformable in the direction Z with fixed ends defined by the central portions (50c, 60c) in the vicinity of the fixed portions 28 and 29, wherein the direction Z is perpendicular to the plane in which the mirror portion the pair of first beam portions and the pair of second beam portions extend when the driving portions (50, 60) are undeformed; and
the beam portion includes a pair of first beam portions (22, 23) having first end portions (22a, 23a) connected with both sides of said mirror portion respectively and a pair of second beam portions (24, 25) connected with second end portions (22b, 23b) of said pair of first beam portions respectively, the driving portion includes a first driving portion (50) having a pair of first connecting portions (50f, 50g) connected with first end portions (24b, 25b) of said pair of second beam portions respectively and a second driving portion (60) having a pair of second connecting portions (60f, 60g) connected with second end portions (24c, 25c) of said pair of second beam portions respectively, the vibrating mirror element being **characterized in that** the widths (W4) of said pair of first connecting portions of said first driving portion are rendered smaller than the width of a portion of said first driving portion other than said pair of first connecting portions respectively, while with widths (W4) of said pair of second connecting portions of said second driving portion are rendered smaller than the width of a portion of said driving portion other than said pair of second connecting portions respectively, wherein the respective widths are measured in the direction in which said second beam portion of said connecting portion extends.

2. The vibrating mirror element according to claim 1, wherein
said connecting portions of said driving portions are formed on end portions (50f, 50g, 60f, 60g) of said driving portions.

3. The vibrating mirror element according to claim 1,
wherein
said beam portion is connected with said driving portions from a direction orthogonal to the longitudinal direction of said driving portions on said connecting portions, and
a side surface (50c, 60c) of said driving portion opposite to said connecting portions is formed to extend in a direction parallel to the longitudinal direction of said driving portions.

4. The vibrating mirror element according to claim 3,
wherein
a side surface (50d, 60d) of said driving portion closer to said connecting portions is formed to protrude toward the side of said beam portions in plan view.

5. The vibrating mirror element according to claim 1,
wherein
said pair of first connecting portions of said first driving portions are formed on both end portions (50f, 50g) of said first driving portions respectively, while said pair of second connecting portions of said driving portions are formed
on both end portions (60f, 60g) of said second driving portions respectively.

6. The vibrating mirror element according to claim 1, wherein said supporting portions when fixed to bases each constitute a fixed end in vibration of said driving portions, wherein
said driving portions are so formed that the width thereof gradually reduces from a portion in the vicinity of said supporting portions toward said connecting portions of said driving portions in plan view.

7. The vibrating mirror element according to claim 6,
wherein
said driving portions are so formed that the width thereof is continuously reduced from said portion in the vicinity of said supporting portions toward said connecting portions of said driving portions in plan view.

8. The vibrating mirror element according to claim 7,
wherein
a side surface (50d, 60d) of said driving portions closer to said connecting portion is formed to linearly extend in a state inclined with respect to the longitudinal direction of said driving portions in plan view.

9. The vibrating mirror element according to claim 8,
wherein
said driving portions (350, 360) are so formed that the width thereof is reduced stepwise from said portion in the vicinity of said supporting portion toward said connecting portions (350f, 350g, 360f, 360g) of said driving portion in plan view.

10. The vibrating mirror element according to claim 9,
wherein
a side surface (350d, 360d) of said driving portions closer to said connecting portions is formed to have a step in plan view.

11. The vibrating mirror element according to claim 7,
wherein
The width (W1, W2) of said beam portion is rendered smaller than the width (W3) of at least said portion of said driving portion in the vicinity of said supporting portions.

12. The vibrating mirror element according to claim 1,
wherein
said driving portions are formed to be symmetrical to a straight line passing through a central portion of said driving portions in the longitudinal direction and extending in the short-side direction of said driving portions in plan view.

13. The vibrating mirror element according to claim 1,
wherein
said connecting portions of said driving portions are formed as a free end, and
said beam portion connected to said connecting portions of said driving portion is inclined and torsionally deformed by flexural deformation and torsional deformation of said driving portions.

14. The vibrating mirror element according to claim 1,
wherein
said supporting portions include outer beam portions (422, 423, 424, 425) which are torsionally deformably connected to said driving portions, and the vibrating mirror element includes an outer driving portions (450, 460) having an outer connecting portions connected with said outer beam portions for driving said mirror portion.

## Patentansprüche

1. Schwingendes Spiegelelement (10), das Folgendes umfasst:
einen Spiegelteil (21), der Licht reflektiert,
einen drehverformbaren Balkenteil (22, 23, 24, 25), der mit dem Spiegelteil verbunden ist, zum Lagern des Spiegelteils in schwingender Weise und
ein Paar Antriebsteile (50, 60) mit Verbindungsabschnitten (50f, 50g, 60f, 60g), die mit dem Balkenteil verbunden sind, zum Betätigen des Spiegelteils durch den drehverformbaren Balkenteil, worin
das schwingende Spiegelelement ferner ein Paar Lagerteile (28, 29) umfasst, das in der Nachbarschaft jeweils mittlerer Abschnitte (50c, 60c) des Paares Antriebsteile in Längsrichtung vorgesehen ist, um bei Schwingen des Paares Antriebsteile lagernde Enden darzustellen und das Paar Antriebsteile zu fixieren, worin
die Antriebsteile (50, 60) so ausgebildet sind, dass sie in Richtung Z konkav und konvex mit fixierten Enden, die durch die mittleren Abschnitte (50c, 60c) in Nachbarschaft der fixierten Abschnitte (28) und (29) definiert sind, verformbar sind, worin die Richtung Z im rechten Winkel zu der Ebene ist, in der sich der Spiegelteil, das Paar erster Balkenteile und das Paar zweiter Balkenteile erstrecken, wenn die Antriebsteile (50, 60) unverformt sind, und
der Balkenteil ein Paar erster Balkenteile (22, 23) mit ersten Endabschnitten (22a, 23a), die mit je einer der beiden Seiten des Spiegelteils verbunden sind, und ein Paar zweiter Balkenteile (24, 25), die mit jeweils zweiten Endabschnitten (22b, 23b) des Paares erster Balkenteile verbunden sind, umfasst, der Antriebsteil einen ersten Antriebsteil (50) mit einem Paar erster Verbindungsabschnitte (50f, 50g), die jeweils mit ersten Endabschnitten (24b, 25b) des Paares zweiter Balkenteile verbunden sind, und einen zweiten Antriebsteil (60) mit einem Paar zweiter Verbindungsabschnitte (60f, 60g), die jeweils mit zweiten Endabschnitten (24c, 25c) des Paares zweiter Balkenteile verbunden sind, umfasst, wobei das schwingende Spiegelelement **dadurch gekennzeichnet ist, dass** die Breite (W4) des Paares erster Verbindungsabschnitte des ersten Antriebsteils jeweils kleiner ausgebildet ist als die Breite eines Abschnitts des ersten Antriebsteils, der nicht dem Paar erster Verbindungsabschnitte angehört, während die Breite (W4) des Paares zweiter Verbindungsabschnitte des zweiten Antriebsteils jeweils kleiner ausgebildet ist als die Breite eines Abschnitts des Antriebsteils, der nicht dem Paar zweiter Verbindungsabschnitte angehört, worin die jeweilige Breite in der Richtung gemessen wird, in die der zweite Balkenteil des Verbindungsabschnitts sich erstreckt.

2. Schwingendes Spiegelelement nach Anspruch 1, worin die Verbindungsabschnitte der Antriebsteile an Endabschnitten (50f, 50g, 60f, 60g) der Antriebsteile ausgebildet sind.

3. Schwingendes Spiegelelement nach Anspruch 1, worin
der Balkenteil mit den Antriebsteilen aus einer zur Längsrichtung der Antriebsteile auf den Verbindungsabschnitten rechtwinkeligen Richtung verbunden ist und
eine den Verbindungsabschnitten gegenüberliegende Seitenfläche (50c, 60c) des Antriebsteils so ausgebildet ist, dass sie sich in einer Richtung parallel zur Längsrichtung der Antriebsteile erstreckt.

4. Schwingendes Spiegelelement nach Anspruch 3, worin
eine näher bei den Verbindungsabschnitten liegende Seitenfläche (50d, 60d) des Antriebsteils so ausgebildet ist, dass sie in Draufsicht auf die Seite der Balkenteile zu ragt.

5. Schwingendes Spiegelelement nach Anspruch 1, worin
das Paar erster Verbindungsabschnitte der ersten Antriebsteile jeweils an den beiden Endabschnitten (50f, 50g) der ersten Antriebsteile ausgebildet ist, während das Paar zweiter Verbindungsabschnitte der Antriebsteile jeweils an den beiden Endabschnitten (60f, 60g) der zweiten Antriebsteile ausgebildet ist.

6. Schwingendes Spiegelelement nach Anspruch 1, worin die Lagerteile, wenn sie an Basisteilen fixiert sind, bei Schwingen der Antriebsteile jeweils ein fixiertes Ende darstellen, worin
die Antriebsteile so ausgebildet sind, dass in Draufsicht ihre Breite von einem Abschnitt in der Nachbarschaft der Lagerteile in Richtung der Verbindungsabschnitte der Antriebsteile graduell abnimmt.

7. Schwingendes Spiegelelement nach Anspruch 6, worin
die Antriebsteile so ausgebildet sind, dass in Draufsicht ihre Breite von dem Abschnitt in der Nachbarschaft der Lagerteile in Richtung der Verbindungsabschnitte der Antriebsteile kontinuierlich abnimmt.

8. Schwingendes Spiegelelement nach Anspruch 7, worin
eine näher beim Verbindungsabschnitt liegende Seitenfläche (50d, 60d) der Antriebsteile so ausgebildet ist, dass sie sich in Draufsicht in einem in Bezug auf die Längsrichtung der Antriebsteile schräggestelltem Zustand linear erstreckt.

9. Schwingendes Spiegelelement nach Anspruch 8, worin
die Antriebsteile (350, 360) so ausgebildet sind, dass in Draufsicht ihre Breite von dem Abschnitt in der Nachbarschaft des Lagerteils in Richtung der Verbindungsabschnitte (350f, 350g, 360f, 360g) des Antriebsteils schrittweise abnimmt.

10. Schwingendes Spiegelelement nach Anspruch 9, worin
eine näher beim Verbindungsabschnitt liegende Seitenfläche (350d, 360d) der Antriebsteile so ausgebildet ist, dass sie in Draufsicht eine Stufe aufweist.

11. Schwingendes Spiegelelement nach Anspruch 7, worin
die Breite (W1, W2) des Balkenteils kleiner ausgebildet ist als die Breite (W3) des zumindest einen Abschnitts des Antriebsteils in der Nachbarschaft der Lagerteile.

12. Schwingendes Spiegelelement nach Anspruch 1, worin
die Antriebsteile so ausgebildet sind, dass sie in Draufsicht zu einer geraden Linie symmetrisch sind, die durch einen mittleren Abschnitt der Antriebsteile in Längsrichtung verläuft und sich in Richtung der kürzeren Seite der Antriebsteile erstreckt.

13. Schwingendes Spiegelelement nach Anspruch 1, worin
die Verbindungsabschnitte der Antriebsteile als freies Ende ausgebildet sind
und
der Balkenteil, der mit den Verbindungsabschnitten des Antriebsteils verbunden ist, schräggestellt und durch Biegeverformung und Drehverformung der Antriebsteile verformt wird.

14. Schwingendes Spiegelelement nach Anspruch 1, worin
die Lagerteile Außenbalkenteile (422, 423, 424, 425) umfassen, die drehverformbar mit den Antriebsteilen verbunden sind, und das schwingende Spiegelelement zum Betätigen des Spiegelteils Außenantriebsteile (450, 460) mit äußeren Verbindungsabschnitten umfasst, die mit den Außenbalkenteilen verbunden sind.

## Revendications

1. Elément formant miroir vibrant (10) comprenant :
une partie formant miroir (21) réfléchissant la lumière ;
une partie formant poutre (22, 23, 24, 25) déformable en torsion reliée à ladite partie formant miroir pour supporter ladite partie formant miroir d'une manière vibratoire ; et
une paire de parties d'entraînement (50, 60) comportant des parties de liaison (50f, 50g, 60f, 60g) reliées à ladite partie formant poutre pour entraîner ladite partie formant miroir par ladite partie formant poutre déformable en torsion, dans lequel
l'élément formant miroir vibrant comprend en outre une paire de parties de support (28, 29) prévues dans le voisinage des parties centrales (50c, 60c) de ladite paire de parties d'entraînement dans la direction longitudinale, respectivement, pour constituer des extrémités de support lors de la vibration de ladite paire de parties d'entraînement et fixer ladite paire de parties d'entraînement ; dans lequel
les parties d'entraînement (50, 60) sont formées pour être déformables de manière concave et de manière convexe dans la direction Z, les extrémités fixes étant définies par les parties centrales (50c, 60c) dans le voisinage des parties fixes (28 et 29), dans lequel la direction Z est perpendiculaire au plan dans lequel la partie formant miroir, la paire de premières parties formant poutre et la paire de deuxièmes parties formant poutre s'étendent lorsque les parties d'entraînement (50, 60) ne sont pas déformées ; et
la partie formant poutre comprend une paire de premières parties formant poutre (22, 23) ayant des premières parties d'extrémité (22a, 23a) reliées aux deux côtés de ladite partie formant miroir, respectivement, et une paire de deuxièmes parties formant poutre (24, 25) reliées aux deuxièmes parties d'extrémité (22b, 23b) de ladite paire de premières parties formant poutre, respectivement, la partie d'entraînement comprend une première partie d'entraînement (50) comportant une paire de premières parties de liaison (50f, 50g) reliées aux premières parties d'extrémité (24b, 25b) de ladite paire de deuxièmes parties formant poutre, respectivement, et une deuxième partie d'entraînement (60) comportant une paire de deuxièmes parties de liaison (60f, 60g) reliées aux deuxièmes parties d'extrémité (24c, 25c) de ladite paire de deuxièmes parties formant poutre, respectivement, l'élément formant miroir vibrant étant **caractérisé en ce que** les largeurs (W4) de ladite paire de premières parties de liaison de ladite première partie d'entraînement sont plus petites que la largeur d'une partie de ladite première partie d'entraînement autre que ladite paire de premières parties de liaison, respectivement, tandis que les largeurs (W4) de ladite paire de deuxièmes parties de liaison de ladite deuxième partie d'entraînement sont plus petites que la largeur d'une partie de ladite partie d'entraînement autre que ladite paire de deuxièmes parties de liaison, respectivement, dans lequel les largeurs respectives sont mesurées dans la direction dans laquelle ladite deuxième partie formant poutre de ladite partie de liaison s'étend.

2. Elément formant miroir vibrant selon la revendication 1, dans lequel
lesdites parties de liaison desdites parties d'entraînement sont formées sur les parties d'extrémité (50f, 50g, 60f, 60g) desdites parties d'entraînement.

3. Elément formant miroir vibrant selon la revendication 1, dans lequel
ladite partie formant poutre est reliée auxdites parties d'entraînement dans une direction orthogonale à la direction longitudinale desdites parties d'entraînement sur lesdites parties de liaison, et
une surface latérale (50c, 60c) de ladite partie d'entraînement opposée auxdites parties de liaison est formée pour s'étendre dans une direction parallèle à la direction longitudinale desdites parties d'entraînement.

4. Elément formant miroir vibrant selon la revendication 3, dans lequel
une surface latérale (50d, 60d) de ladite partie d'entraînement plus près desdites parties de liaison est formée pour faire saillie vers le côté desdites parties formant poutre en vue plane.

5. Elément formant miroir vibrant selon la revendication 1, dans lequel
ladite paire de premières parties de liaison desdites premières parties d'entraînement est formée sur les deux parties d'extrémité (50f, 50g) desdites premières parties d'entraînement, respectivement, tandis que ladite paire de deuxièmes parties de liaison desdites parties d'entraînement est formée sur les deux parties d'extrémité (60f, 60g) desdites deuxièmes parties d'entraînement, respectivement.

6. Elément formant miroir vibrant selon la revendication 1, dans lequel lesdites parties de support, lorsqu'elles sont fixées à des bases, constituent chacune une extrémité fixe lors de la vibration desdites parties d'entraînement, dans lequel
lesdites parties d'entraînement sont formées de sorte que la largeur de celles-ci diminue graduellement d'une partie dans le voisinage desdites parties de support vers lesdites parties de liaison desdites parties d'entraînement en vue plane.

7. Elément formant miroir vibrant selon la revendication 6, dans lequel
lesdites parties d'entraînement sont formées de sorte que la largeur de celles-ci diminue continûment de ladite partie dans le voisinage desdites parties de support vers lesdites parties de liaison desdites parties d'entraînement en vue plane.

8. Elément formant miroir vibrant selon la revendication 7, dans lequel
une surface latérale (50d, 60d) desdites parties d'entraînement plus près de ladite partie de liaison est formée pour s'étendre linéairement dans un état incliné par rapport à la direction longitudinale desdites parties d'entraînement en vue plane.

9. Elément formant miroir vibrant selon la revendication 8, dans lequel
lesdites parties d'entraînement (350, 360) sont formées de sorte que la largeur de celles-ci diminue par pas de ladite partie dans le voisinage de ladite partie de support vers lesdites parties de liaison (350f, 350g, 360f, 360g) de ladite partie d'entraînement en vue plane.

10. Elément formant miroir vibrant selon la revendication 9, dans lequel
une surface latérale (350d, 360d) desdites parties d'entraînement plus près desdites parties de liaison est formée pour qu'elle comporte un gradin en vue plane.

11. Elément formant miroir vibrant selon la revendication 7, dans lequel
la largeur (W1, W2) de ladite partie formant poutre est plus petite que la largeur (W3) d'au moins ladite partie de ladite partie d'entraînement dans le voisinage desdites parties de support.

12. Elément formant miroir vibrant selon la revendication 1, dans lequel
lesdites parties d'entraînement sont formées pour être symétriques par rapport à une droite passant par une partie centrale desdites parties d'entraînement dans la direction longitudinale et s'étendant dans la direction de côté court desdites parties d'entraînement en vue plane.

13. Elément formant miroir vibrant selon la revendication 1, dans lequel
lesdites parties de liaison desdites parties d'entraînement sont formées en tant qu'extrémité libre, et
ladite partie formant poutre reliée auxdites parties de liaison de ladite partie d'entraînement est inclinée et déformée en torsion par une déformation de flexion et une déformation de torsion desdites parties d'entraînement.

14. Elément formant miroir vibrant selon la revendication 1, dans lequel
lesdites parties de support comprennent des parties formant poutre extérieures (422, 423, 424, 425) qui sont reliées pour être déformées en torsion auxdites parties d'entraînement, et l'élément formant miroir vibrant comprend des parties d'entraînement extérieures (450, 460) comportant des parties de liaison extérieures reliées auxdites parties formant poutre extérieures pour entraîner ladite partie formant miroir.
